# EUROPÄISCHE PATENTANMELDUNG

(11) **EP 4 553 644 A1**
(43) Veröffentlichungstag der Anmeldung: **14.05.2025**
(21) Anmeldenummer: 23208282.6
(22) Anmeldetag: 07.11.2023
(51) Int. Cl.: G06F 8/20, G06F 8/30, G06F 8/41

(54) **MEHRSTUFIGES VERFAHREN ZUR GENERIERUNG VON PROGRAMMCODE MITTELS EINER GENERATIVEN KI, COMPUTERPROGRAMMPRODUKT, SIGNAL UND VORRICHTUNG**

(71) Anmelder: Siemens Aktiengesellschaft, 80333 München (DE)
(72) Erfinder: Eichenseher, Matthias, 93176 Beratzhausen (DE); Reimann, Thorsten, 91052 Erlangen (DE)
(74) Vertreter: Siemens Patent Attorneys

(57) **Zusammenfassung**

Die Erfindung betrifft ein mehrstufiges Verfahren zur Generierung von Programmcode mittels einer generativen KI, ein Computerprogrammprodukt, ein Signal und eine Vorrichtung.

Die Anforderungen für die Codegenerierung werden in einer generativen KI auf Basis einer syntaktischen und semantischen strukturierten Beschreibung generiert, was verbesserte Ergebnisse liefert gegenüber einer Lösung ohne diese Strukturierung, beispielsweise als reiner Fließtext.

## Beschreibung

Die Erfindung betrifft ein mehrstufiges Verfahren zur Generierung von Programmcode mittels einer generativen KI, ein Computerprogrammprodukt, ein Signal und eine Vorrichtung.

Generative AI (Künstliche Intelligenz KI, auch Artificial Intelligence, AI, genannt) ist eine weit gefasste Kategorie für eine Art von KI, die sich auf jede künstliche Intelligenz bezieht, die originäre Inhalte erstellen kann. Generative KI-Tools basieren auf zugrunde liegenden KI-Modellen, z. B. einem großen Sprachmodell (large language model LLM).

Ein großes Sprachmodell (LLM) ist eine Art von Sprachmodell, das sich durch seine Fähigkeit auszeichnet, Sprache für allgemeine Zwecke zu verstehen und zu erzeugen. LLMs erwerben diese Fähigkeiten, indem sie massive Datenmengen verwenden, um während des Trainings Milliarden von Parametern zu lernen. LLMs verwenden neuronale Netze (hauptsächlich Transformers, eine spezielle Art von Deep-Learning-Architektur) und werden durch selbstüberwachtes (selfsupervised) und halbüberwachtes (semisupervised) Lernen (vor-)trainiert.

Als sogenannte autoregressive Sprachmodelle funktionieren sie, indem sie einen Eingabetext verwenden und basierend auf einem Sprachmodell wiederholt das nächste Token oder Wort "vorhersagen". Man geht davon aus, dass sie verankertes Wissen über Syntax, Semantik und "Ontologie" erwerben, das in menschlichen Sprachkorpora enthalten ist, aber auch Ungenauigkeiten und Verzerrungen, die in den Korpora vorhanden sind.

Bemerkenswerte Beispiele sind die GPT-Modelle von OpenAI (z.B. GPT-3.5 und GPT-4, die in ChatGPT verwendet werden), Googles PaLM (verwendet in Bard) und Metas LLaMa, sowie BLOOM, Ernie 3.0 Titan und Anthropics Claude 2. Large Language LLM Models erobern im Augenblick viele Bereiche unseres privaten und Berufslebens, die man sich bis vor kurzem nicht vorstellen konnte. Neben Prosa-Texten wird die generative KI auch in der Software-Entwicklung verwendet, und durch spezielle dafür eingerichtete Tools unterstützt, beispielsweise mit Lösungen wie Github Copilot X**, das einem Software-Entwickler als intelligenter Assistent zur Seite steht, der automatisch Code-Vorschläge für sein Problem generiert, sowie die notwendigen Testfälle mit Testcode generiert, damit die erzeugte Software gleich geprüft werden kann.

Aus unseren bisherigen Erfahrungen heraus wird das "Prompt-Engineering" bei ChatGPT und vergleichbaren Tools basierend auf Large Language Models, zu einer wichtigen Fähigkeit, damit man solche Assistenzsysteme effektiv und effizient in der Software-Entwicklung und Test einsetzen kann.

Prompt Engineering ist der Prozess, bei dem Lösungen mit generativer künstlicher Intelligenz (generative KI) so gesteuert werden, dass sie die gewünschten Ergebnisse erzielen. Auch wenn generative KI versucht, Menschen nachzuahmen, sind detaillierte Anweisungen erforderlich, um qualitativ hochwertige und relevante Ergebnisse zu erzielen. Beim Prompt-Engineering werden die am besten geeigneten Formate, Ausdrücke, Wörter und Symbole ausgewählt, anhand derer die KI sinnvoller mit Ihren Benutzern interagieren kann. Häufig werden hierfür neben Kreativität auch Versuch und Irrtum (Trial & Error) verwendet, um eine Sammlung von Eingabetexten zu erstellen, sodass die generative KI einer Anwendung erwartungsgemäß funktioniert.

Hier ein Beispiel für eine Aufgabenbeschreibung und den daraus resultierenden Programmcode:
Mit einem LLM-Model wurde aus der Beschreibung der folgende SCL-Code generiert (Input-Prompt):
"Bitte stellen Sie den Code für den folgenden Prozeß auf einer Maschine zur Verfügung" (Prompt Text Eingabe in Englisch) :
1. Werkstück (Workpiece) auf Träger 1 (Carrier) stellen
2. Träger 1 fährt nach Drücken der Starttaste zum Greifer 1 (Gripper)
3. Greifer 1 nimmt das Werkstück und hebt es zu Station 1. Stelle sicher, dass die Bewegung nur bei geschlossenem Greifer erfolgt.
4. Station 1 beginnt mit der Bearbeitung des Werkstücks, nachdem es von der Kamera erkannt wurde.

Aus der Beschreibung wird ein Programm-Code generiert, der wie folgt aussieht:

```
 FUNCTION machine_process: REAL
     VAR_INPUT
          Start_button: BOOL;
          Workpiece_detected: BOOL;
     END_VAR
     VAR_TEMP
          carrier_1_position: REAL := REAL#0.0;
          gripper_1_closed: BOOL := FALSE;
          workpiece_machined: BOOL := FALSE;
     END_VAR
 
 //Step 1: Set workpiece at carrier 1
 Carrier_1_position := REAL#1.0;
 //Step 2: carrier1 moves to gripper_1 after pressing the
 start button
 IF start_button THEN
     carrier _1_position := REAL#2.0;
     ENDIF;
 
 //Step 3: Gripper_1 takes the workpiece and lifts it to the
 station_1
 IF carrier_1_position = 2.0 THEN
 IF gripper_1_closed THEN
   Carrier_1_position := REAL #3.0;
   ENDIF;
   ENDIF;
 
 //Step 4: Station_1 starts automatically with machining the
 workpiece after it has been detected
 IF carrier_1_position = 3.0 AND workpiece_detected THEN
 .workpiece_machined := TRUE;
 .END_IF;
 
 Machine-process := TO_REAL (TO_INT (workpiece_machined));
 
 END_FUNCTION
```

Beim Vergleich von generiertem Code und der zugrundeliegenden Beschreibung erkennt man Schwachstellen in beiden Artefakten. Die sehr einfache und unstrukturierte Vorgangsbeschreibung ist nicht vollständig und nicht konsistent. Der daraus erzeugte Produktiv-Code in SCL (Structed Control Language) hat folgerichtig diese Schwächen geerbt.

Dabei handelt es sich nicht um eine grundsätzliche Schwäche von LLMs, sondern das Ergebnis ist im Wesentlichen abhängig vom Prompt-Engineering des Anwenders.

Bislang versucht man, diese Schwäche bei Verwendung von einer generativen KI mittels einem eher zufälligen und iterativen Prompt-Engineering zu verbessern. Das bedeutet, der Prompt wird so lange angepasst, bis man den geforderten und erwarteten Code erhält.

Eine andere Methode zur Verbesserung des Ergebnisses ist, den generierten Code als Basis für die weitere manuelle Verbesserungen zu verwenden. Dabei stellt der generierte Code ein Gerüst für die Funktion da, die erstellt werden soll. Alle Erweiterungen und Verbesserungen werden dann manuell vom Entwickler implementiert.

Auch dieses Vorgehen ist unstrukturiert, mit unzureichender Syntax (Regeln, nach den ein Text strukturiert wird) und Semantik (Zuordnung von der Bedeutung des Textes).

Es ist daher Aufgabe, das beschriebene Problem zu beheben, eine syntaktisch und semantisch strukturiertere Vorgehensweise für die Generierung von Code mit Hilfe von generativer KI anzugeben. -

Die Aufgabe wird durch ein Verfahren gemäß den Merkmalen des unabhängigen Patentanspruchs 1 gelöst.

Das beanspruchte Verfahren zur Generierung von Programmcode zur Anwendung in einer industriellen Anlage unter Verwendung einer generativen KI basiert auf einer technische Aufgabenbeschreibung des zu generierenden Programmcodes für die industrielle Anlage. Die generative KI wird nach Übergabe eines Eingabe-Prompt gestartet, mit folgenden Schritten:
Schritt A: die Aufgabenbeschreibung wird in die generative KI eingegeben und als erste Ausgabe wird von der generativen KI eine Übersetzung der Aufgabenbeschreibung in eine Aufgabenbeschreibung in einer strukturierten Beschreibungssprache erzeugt.
Schritt B: die in der strukturierten Beschreibungssprache erstellten Aufgabenbeschreibung wird in die generativen KI eingegeben und als zweite Ausgabe von der generativen KI erfolgt eine Übersetzung in Programmcode.

In einer Ausführungsform der Erfindung werden die Aufgabenbeschreibung zuerst mittels der generative KI überprüft wird und durch die generative KI als Zwischenergebnis die durch die Überprüfung erkannten Probleme aufgelistet.

In einem vorgelagerten Schritt kann durch die generative KI damit eine verbesserte Aufgabenbeschreibung erstellt werden, anhand derer eine Eingabe von der Aufgabenbeschreibung und den erkannten Problemen generiert wird, zur Eingabe in dem oben beschriebenen Schritt A.

In einer Ausführungsform der Erfindung handelt es sich bei der verwendeten Beschreibungssprache um die Beschreibungssprache Gherkin. Diese ist einfach zu lesen und weit verbreitet. Es gibt bereits einige Tools, welche zur Umsetzung von Gherkin Code in diverse Programmiersprachen wie C Sharp oder C++ verwendet werden können.

Alternativ kann als Beschreibungssprache die Programmiersprache SCL (Structured Control Language), auf der auch der Test-code der TIA Testsuite basiert, verwendet werden. Hierbei handelt es sich nicht um eine abschließende Aufzählung, weitere Alternativen sind denkbar.

In einer Ausführungsform wird in dem vorgeschalteten Schritt durch die generative KI die Aufgabenbeschreibung nach zumindest einem der folgenden Kriterien überprüft:
- Vollständigkeit der Beschreibung,
- Konsistenz der Beschreibung,
- Logik der in der Beschreibung enthaltenen Schritte,
- Eindeutigkeit der Beschreibung,
- Ausführbarkeit.

Beispiele für diese Kriterien werden weiter unten im Ausführungsbeispiel genannt. Für die Generierung eines Funktionscodes sorgt die Überprüfung nach diesen Kriterien dafür, das bereits zu Beginn grundsätzliche Fehlerquellen der Programmierung ausgeschlossen werden können, welches später beim Test der Software viel Zeit einsparen kann. Für die Generierung von entsprechenden Testfällen kann man diese Kriterien verwenden um im Funktionscode nach diesen Problemen gezielt zu suchen.

In einer Ausführungsform der Erfindung wird der im Schritt B erzeugte Funktionscode zur Ausführung auf der industriellen Anlage erstellt, unter Berücksichtigung weiterer Vorgaben zur Strukturierung des Ausgabecodes, beispielsweise Variablen- oder Funktionsdeklarationen, Ablauf oder Kommentare.

In einer weiteren Ausführungsform der Erfindung ist der im Schritt B erzeugte Programmcode ein Testcode, zum Testen des für die Ausführung auf der industriellen Anlage vorgesehenen Funktionscodes.

Dieser erzeugte Testcode kann im Prompt zuvor festgelegte Eigenschaften des Funktionscodes prüfen. Diese Eigenschaften können mittels der Testtechniken Grenzwertanalyse oder Äquivalenzklassen-Prüfung getestet werden. Diese und weitere Testtechniken sind beispielsweise in der ISO 29119 Teil 4 beschrieben.

ISO/IEC/IEEE 29119 Software and systems engineering -- Software testing ist eine Reihe von internationalen Normen für Softwaretests. Die Norm definiert Konzepte, Vokabular und Definitionen (Teil 1), Prozesse (Teil 2), Dokumentation (Teil 3), Techniken (Teil 4) und ein Prozessbewertungsmodell (Teil 5) für das Testen, das in jedem Softwareentwicklungszyklus verwendet werden kann.

Teil 4 enthält Standarddefinitionen von Softwaretestentwurfstechniken (auch bekannt als Testfallentwurfstechniken oder Testmethoden) und entsprechende Abdeckungsmaße, die während der in Teil 2 definierten Testentwurfs- und -Implementierungsprozesse verwendet werden können. Die Techniken von Teil 4 sind zur Unterstützung von Teil 2 gedacht oder können separat davon verwendet werden. Die Testentwurfstechniken der Norm sind in drei Hauptkategorien eingeteilt: Spezifikations-, struktur- und erfahrungsbasierte Testentwurfstechniken.

Die Aufgabe wird weiterhin durch ein Computerprogrammprodukt mit den Merkmalen des unabhängigen Patentanspruchs 11 und ein Signal gemäß den Merkmalen des Patentanspruchs 12 gelöst.

Die Aufgabe wird außerdem durch eine Vorrichtung gelöst, welche die Merkmale des Patentanspruchs 13 aufweist.

Strukturierte Beschreibungssprachen (domain specific languages DSL) sind bereits bekannt, ein bekanntes Beispiel für eine solche Sprache ist Gherkin.

Bei Gherkin handelt es sich um eine einfache Beschreibungssprache zur strukturierten Formulierung von Szenarien im Rahmen von verhaltensgetriebener Software-Entwicklung nach BDD-Prinzipien (behaviour driven development, bekannt aus der agilen Softwareentwicklung). Im Fokus steht eine möglichst einfache und wenig formale Möglichkeit um Szenarien, die das fachliche Verhalten eines Software-Features abbilden, als konkrete "Beispiele" zu beschreiben.

Als eine kaum formale Sprache dient beispielsweise Gherkin bislang primär als eine Kommunikationssprache in agilen Teams zur Beschreibung von Systemverhalten anhand der konkreten Beispiele und unterstützt damit folgende Ziele:
- Erschaffung von verständlicher und ausführbarer Spezifikation für alle Stakeholder in agilen Teams
- Ausgangsbasis für die Automatisierung der Tests
- Dokumentation des Systemverhaltens.

Im Unterschied zu der in der Qualitätssicherung verbreiteten Methodik zur Beschreibung der Szenarien für Test und auch Entwicklung des Programmcodes mit proprietären und streng formalen Schlüsselwörtern einer schlüsselwort-basierten (Test)automatisierungs-DSL, legt Gherkin kaum formale Anforderungen an die Beschreibungssprache, so dass die Szenarien inhaltlich in beliebiger natürlicher Sprache ausformuliert werden können und sich lediglich hinsichtlich der Struktur an das durch Gherkin vorgegebene Rahmenwerk "GIVEN - WHEN - THEN" halten sollten.

Die Spezifikation der Szenarien mit Gherkin wird normalerweise in sogenannten "Feature Files" abgelegt. Bei diesen Files handelt es sich um menschlich lesbare Textdateien. Dabei enthält ein Feature File immer einen Oberknoten "FEATURE", welcher ein oder mehrere Szenarien enthalten kann, die das Verhalten des Features als konkrete Beispiele mittels Szenarien-Schritte beschreiben.

Es gibt bereits Diskussionen, Chat GPT (und andere generative AI-Tools) zu verwenden um Gherkin Syntax zu erzeugen.

Es gibt bereits Software Tools, welche Gherkin Code in Programm-Code wie C Sharp, C++ oder Python zu übersetzen.

Eine andere strukturierte Beschreibungssprache, welche hier alternativ verwendet werden könnte, ist die TIA-Testsuite der Firma Siemens, welche es dem Benutzer ermöglicht, automatische Applikationstests im TIA Portal zu konfigurieren und auszuführen.

Erfindungsgemäß wird nun der Text der strukturierten Beschreibungssprache, als bspw. der Gherkin Code, verwendet, um durch geschickte Prompt-Generierung die Generative AI zu steuern.

Im Folgenden wird die Erfindung ergänzend durch Ausführungsbeispiele dargelegt.

Dabei zeigt die
Figur 1 ein grundlegendes Vorgehen in drei Schritten
Figur 2 die Einbindung des Vorgehens in den Entwicklungsprozeß.

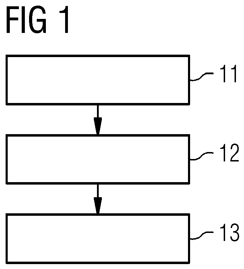

Figur 1 zeigt das Grundprinzip des Verfahrens, hier werden die für die Erfindung wesentlichen Schritte herausgestellt.

### Schritt 1: Die Eingabe (Input) für den ersten Prompt zur Verarbeitung in der Generativen KI:

Eine Vorgangsbeschreibung, wie sie in der Problemstellung beschrieben ist. Der Arbeitsauftrag besteht darin, Testfall-Beschreibungen in einem strukturierten vorgegebenen Format zu erstellen.

### Schritt 2:

Das Ergebnis vom ersten Prompt wird als Input für den nächsten Prompt verwendet. Im nächsten Prompt soll der Produktiv-Code generiert werden.

### Schritt 3:

Wenn man die Ergebnisse von der ursprünglichen Problemstellung und von der aktuellen Variante vergleicht, stellt man fest, dass der auf Basis der Gherkin Testfallbeschreibung der Produktiv-Code wesentlich besser die Anforderungen abdeckt und erfüllt, weil er konsistenter, vollständiger und logischer ist und damit sowohl dem Tester einen leichteren Überblick verschafft, wie vollständig und korrekt der Test bereits abgedeckt ist, als auch bei der Analyse der Vorgaben zur Generierung Testfälle unterstützt.

Erfindungsgemäß werden die Anforderungen für die Codegenerierung in einer auf Basis einer syntaktischen und semantischen strukturierten Beschreibung generiert, was verbesserte Ergebnisse liefert gegenüber einer Lösung ohne diese Strukturierung (beispielsweise als reiner Fließtext, wie im Stand der Technik beschrieben).

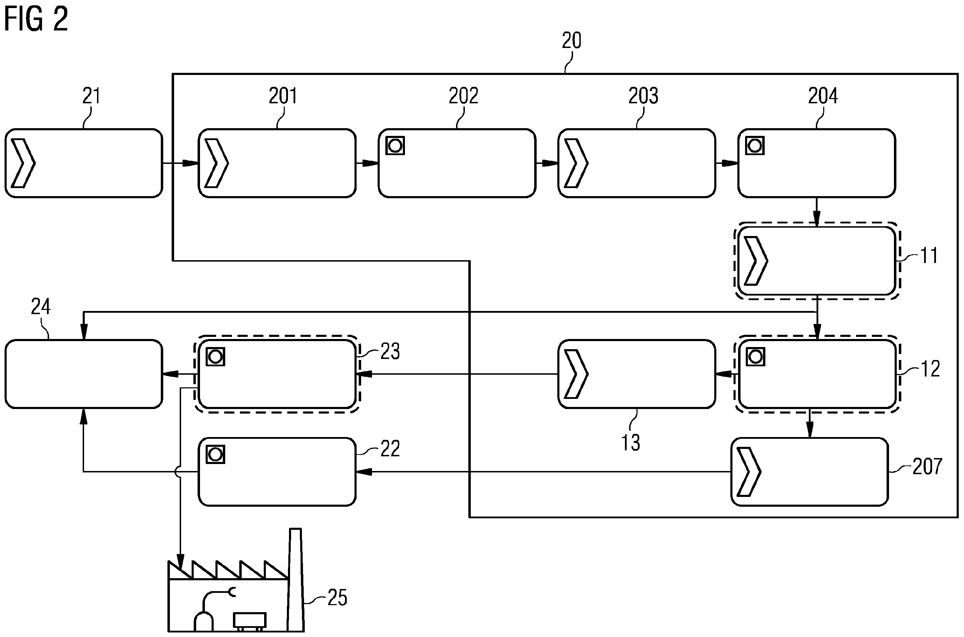

Zum einen hilft die strukturierte Beschreibung bei der Vollständigkeit der Eingabe von Testdaten / Testfällen.
eine
Wenn man die beschriebene Lösung in den Entwicklungsprozess einbindet und mit einigen Prompts erweitert, erhält man die in Figur 2 dargestellte Schrittkette:
Der Hauptprompt, 21 an die generative KI für die Aufgabe als Ausgangspunkt des Verfahrens: Erstelle mir für meine Vorgangsbeschreibung den Produktiv-Code und die dazugehörigen Testfälle, die die Vorgangsbeschreibung validiert.

Dieser Prompt wird durch einem Hintergrund-Prozeß "Background-Prozess" 20 bearbeitet, den der Benutzer nicht sieht, der aus automatisierten und vordefinierten Prompts besteht. Zuerst wird die Vorgangsbeschreibung auf die folgenden Merkmale geprüft, 201:
- Vollständigkeit,
- Konsistenz,
- Logik,
- Eindeutigkeit und
- Ausführbarkeit.

Wenn bei einer der aufgezählten Kriterien ein Defizit festgestellt wird, so kann dieses in die Vorgangsbeschreibung aufgenommen werden und damit den Ausgangspunkt vor der eigentlichen Code-Generierung verbessern.

Das Ergebnis 202 aus dem ersten Schritt ist daher eine Liste von festgestellten Defiziten und vorteilhafterweise bereits von vorgeschlagenen Verbesserungen zu der Ausgangsbeschreibung. Es wird daher im nächsten Schritt 203, durch vordefinierte Prompts basierend auf der ersten Liste mit Verbesserungen automatisiert in die Vorgangsbeschreibung eingepflegt, damit man eine im Fließtext verbesserte Beschreibung erhält, 204.

Für die verbesserte Vorgangsbeschreibung sollen die Testfälle im Gherkin-Format erstellt werden. Die Gherkin-Testfälle sind die Basis für
- die Generierung des Funktions- oder Produktiv-Code, der die weiteren Vorgaben zur Strukturierung des Ausgabecodes berücksichtigt 13
- Testcode für die Validierung der Funktion, mit der Optimierung der Testfälle auf die Kriterien, 17:
   - Grenzwert-Analyse
   - Bildung von Äquivalenzklassen

In einer eigenen Instanz 24 kann am Ende der Produktiv-Code / Funktionscode 23 gegen den Test-Code 22 getestet werden und die Ergebnisse werden dokumentiert.

Beschreibung der Gherkin Syntax:
- -FEATURE beschreibt eine Sammlung von Szenarien, kann auch einer User-Story gleichgesetzt werden.
- SCENARIO ist ein konkreter Anwendungsfall, der das Verhalten des zu testenden Artefakts beschreibt. Dabei ist die Beschreibung in Schritte unterteilt, in Given-, When- und Then-Ausdrücken.
- GIVEN beschreibt die Voraussetzungen oder die Vorbedingungen für den Test,
- WHEN beschreibt die eigentliche Interaktion mit dem zu testenden Artefakt,
- THEN das Ergebnis der Interaktion wird validiert.

Auf Basis dieser Beschreibung kann mit einem Tool wie "Cucumber" direkt Testcode für die Validierung erstellt werden.

Die Schritte im Einzelnen können der Figur 2 entnommen werden:
Der initiale Input 21 (der dann zunächst im einem Hintergrund-Prozeß 20 bearbeitet werden kann) könnte dabei wie folgt lauten:
INPUT: Vorgangsbeschreibung
Auftrag: Generiere Funktionscode & Testfälle für Validierung der Funktionalität.

Dieser Input wird in dem Hintergrund-Prozeß verwendet, 20. Die Vorgangsbeschreibung wird dabei geprüft, wie oben beschrieben.

Beispielsweise wird die Vollständigkeit der Beschreibung geprüft und dabei festgestellt, dass in der Schrittkette ein Schritt nicht beschrieben ist: z. B. wird ein Werkstück von Standort A nach B transportiert, und dann bei C wieder aufgenommen, wie es von B nach C gelangt ist, wird aber nicht beschrieben.

Auch die Logik in der Beschreibung kann überprüft werden, beispielsweise kann ein Greifer einen Gegenstand nur bei Position B aufnehmen, jedoch wird in der Beschreibung der Gegenstand bei der Position A verortet, von dort kann der Greifer den Gegenstand aber nicht aufnehmen.

Als Ergebnis 202 wird dann von der generativen KI erwartet: Eine Beschreibung, bevorzugt eine Liste mit Verbesserungen für Vorgangsbeschreibung.

In einem zweiten Schritt werden der ursprüngliche, unveränderte Input und die im Schritt 202 erzeugten Verbesserungsvorschläge gemeinsam in den Prompt gegeben, 203. Als Ergebnis 204 wird dann eine verbesserte Aufgabenbeschreibung erwartet, welche den Input unter Berücksichtigung der Verbesserungsvorschläge verändert, also beispielsweise einen weiteren Schritt in der Abfolge generiert, welche den vollständigen Weg des Werkstücks abdeckt.

In einem zweiten Schritt wird nun die so ggf. verbesserte Aufgabenbeschreibung eingegeben, 11. Der Auftrag besteht nun darin, diese Aufgabenbeschreibung in eine BDD Gherkin Beschreibung zu übersetzen. Die Ausgabe wird mehrfach verwendet:
1. Die BDD Testfallbeschreibungen 12 werden direkt für die Generierung von Testfällen verwendet 24
2. Die BDD Testfallbeschreibungen 12 werden verwendet um den Funktionscode 23 zu erstellen unter Berücksichtigung der weiteren Vorgaben zur Strukturierung des Ausgabecodes, 208
3. Die BDD Testfallbeschreibungen 12 werden verwendet für die Erstellung eines Test-Codes unter Berücksichtigung von Grenzwertanalysen und Äquivalenzklassen 22.

Ein Beispiel für Tests in BDD-Gherkin-Syntax für eine Transportwagen-Funktionalität:
Dieser Code könnte dann so aussehen:
FEATURE: Transportwagen-Funktionalität
SCENARIO: Belade den Transportwagen
   GIVEN der Transportwagen ist an der Beladestation positioniert
   WHEN kein Werkstück auf dem Transportwagen liegt
   THEN kann das Werkstück auf den Transportwagen geladen werden
SCENARIO: Starte die Bewegung des Transportwagens
   GIVEN der Transportwagen ist beladen
   And das digitale Start-Button-Signal wurde gedrückt
   THEN startet die Bewegung des Transportwagens von der Beladestation zur Entladestation
SCENARIO: Entlade den beladenen Transportwagen
   GIVEN der Greifer ist in der Werkstück-Aufnahme-Position positioniert
   And der Greifer ist nicht belegt
   And der Transportwagen ist an der Entladestation positioniert
   WHEN der Greifer das Werkstück greifen kann
   THEN entlädt der Greifer das Werkstück vom Transportwagen
   And der Greifer fährt hoch, um den Transportwagen als nicht belegt zu erkennen
SCENARIO: Fahre den leeren Transportwagen zur Beladestation zurück
   GIVEN der Transportwagen ist nicht beladen
   THEN fährt der leere Transportwagen zur Beladestation zurück
SCENARIO: Lade das Werkstück an Station_1 ab
   GIVEN Station_1 ist frei
   And der Greifer ist belegt
   WHEN der Greifer das Werkstück an Station _1 abladen kann
   THEN lädt der Greifer das Werkstück an Station_1 ab
***

Ein weiteres Beispiel in der TIA-Testsuite würde wie folgt aussehen:
Format:

```
TEST_CASE "Function Name"
 
 
     PROPERTY
     AUTHOR : "Author Name"
     VERSION : "version number"
     COMMENT : "Comment about the test case"
     SCOPE : "PLC_1"
     END_PROPERTY
 
     VAR
     input_alias_name : <Function Name>_DB.<The actual input
     parameter name> (please match the name from Input Param-
     eter Table);
     output_alias_name : <Function Name>_DB.<The actual ouput
     parameter name> (please match the name from Output Pa-
     rameter Table);
     END_VAR
 
     STEP: "Step name"
     input_alias_name_1 := value to be tested;
     input_alias_name_2 := value to be tested;
     RUN(Time := T#<time milisecond(ms) or second(s) >);
     ASSERT.Equal( output_alias_name, expected value);
     ASSERT.NotEqual( output_alias_name, expected value);
     ASSERT.GreaterThan( output_alias_name, expected value);
     ASSERT.GreaterThanOrEqual( output_alias_name, expected
     value);
     ASSERT.LessThan( output_alias_name, expected value);
     ASSERT.LessThanOrEqual( output_alias_name, expected val-
     ue) ;
     ASSERT.InRange( output_alias_name, expected_min_value,
     expected_max_value);
     END_STEP
 
     END_TEST_CASE
```

Und hier sind einige Beispiele für Testfälle:

```
     STEP: "Test SensorHw with TRUE"
     sensorHw := TRUE;
     RUN(Time := T#50ms);
     ASSERT.Equal(sensor, TRUE);
     END_STEP
 
     STEP: "Test SensorHw with FALSE"
     sensorHw := FALSE;
     RUN(Time := T#50ms);
     ASSERT.Equal(sensor, FALSE);
     END_STEP
 
     STEP: "Test Debounce with DelayOnTime"
     sensorHw := TRUE;
     delayOnTime := T#500ms;
     RUN(Time := T#550ms);
     ASSERT.Equal(sensorDebounce, TRUE);
     END_STEP
```

## Patentansprüche

1. Verfahren (20) zur Generierung von Programmcode zur Anwendung in einer industriellen Anlage (25) unter Verwendung einer generativen KI,
wobei eine technische Aufgabenbeschreibung des zu generierenden Programmcodes für die Anlage in die generative KI mittels eines-Eingabe-Prompt eingegeben wird, mit folgenden Schritten:
Schritt A: die Aufgabenbeschreibung wird in die generative KI eingegeben (11) und als erste Ausgabe von der generativen KI eine Übersetzung der Aufgabenbeschreibung in eine Aufgabenbeschreibung in einer strukturierten Beschreibungssprache (12) erzeugt wird, und
Schritt B: die in der strukturierten Beschreibungssprache erstellten Aufgabenbeschreibung wird in die generativen KI (13) eingegeben und als zweite Ausgabe von der generativen KI erfolgt eine Übersetzung in Programmcode (22, 23).

2. Verfahren gemäß Patentanspruch 1, **dadurch gekennzeichnet, dass**
die Aufgabenbeschreibung zuerst mittels der generative KI überprüft wird (201) und
durch die generative KI als Zwischenergebnis (202) die durch die Überprüfung erkannten Probleme aufgelistet werden und durch die generative KI als verbesserte Aufgabenbeschreibung erstellt wird (204), anhand einer Eingabe (203) von der Aufgabenbeschreibung und der erkannten Probleme, zur Eingabe in Schritt A.

3. Verfahren gemäß Patentanspruch 1 oder 2, **dadurch gekennzeichnet, dass**
es sich bei der verwendeten Beschreibungssprache um die Beschreibungssprache Gherkin handelt.

4. Verfahren gemäß Patentanspruch 1 oder 2, **dadurch gekennzeichnet, dass**
als Beschreibungssprache die Programmiersprache Structured Control Language verwendet wird.

5. Verfahren gemäß einem der vorherigen Patentansprüche 2 bis 4, **dadurch gekennzeichnet, dass**
der vorgeschaltete Schritt (201) durch die generative KI die Aufgabenbeschreibung nach zumindest einem der folgenden Kriterien überprüft:
- Vollständigkeit,
- Konsistenz,
- Logik,
- Eindeutigkeit,
- Ausführbarkeit.

6. Verfahren gemäß einem der vorherigen Patentansprüche, **dadurch gekennzeichnet, dass**
der im Schritt B erzeugte Programmcode ein Funktionscode (23) ist, zur Ausführung auf der industriellen Anlage (25).

7. Verfahren gemäß Patentanspruch 6, **dadurch gekennzeichnet, dass**
der erzeugte Funktionscode (23) erstellt wird unter Berücksichtigung eines Styleguide (13).

8. Verfahren gemäß einem der vorherigen Patentansprüche, **dadurch gekennzeichnet, dass**
der im Schritt B erzeugte Programmcode ein Testcode (22) ist, zum Testen des für die Ausführung auf der industriellen Anlage (25) vorgesehene Funktionscode (23).

9. Verfahren gemäß Patentanspruch 8, **dadurch gekennzeichnet, dass**
der erzeugte Testcode die Einhaltung zuvor festgelegter Grenzwerte prüft.

10. Verfahren gemäß Patentanspruch 8 oder 9, **dadurch gekennzeichnet, dass**
der erzeugte Testcode Testtechniken gemäß ISO 29119 Teil 4 verwendet.

11. Computerprogrammprodukt geeignet und eingerichtet zur Ausführung eines Verfahrens gemäß den Merkmalen eines der Patentansprüche 1 bis 10.

12. Übertragungssignal, das ein Computerprogramm gemäß nach Anspruch 11 überträgt.

13. Vorrichtung (20) geeignet und eingerichtet zur Ausführung einer generativen KI zur Generierung von Programmcode zur Anwendung in einer industriellen Anlage (25),
wobei die generative KI geeignet ist, eine technische Aufgabenbeschreibung des zu generierenden Programmcodes (22, 23) für die Anlage mittels eines-Eingabe-Prompt erhält, und
in eine Aufgabenbeschreibung in einer strukturierten Beschreibungssprache (12) übersetzt, und
diesen in einem zweiten Schritt in Programmcode (22, 23) generiert, gemäß den Merkmalen eines der Verfahren nach Patentanspruch 1 bis 10.
